# EUROPEAN PATENT SPECIFICATION

(11) **EP 0 838 806 B1**
(45) Date of publication and mention of the grant of the patent: **12.01.2000**
(21) Application number: 97118445.2
(22) Date of filing: 23.10.1997
(51) Int. Cl.: G11B 5/00, G11B 5/54, G11B 5/56, G11B 5/48

(54) **Magnetic head supporting mechanism**
Magnetkopfträger
Mécanisme de support de tête magnétique

(30) Priority: 23.10.1996 JP 28099996
(43) Date of publication of application: 29.04.1998
(73) Proprietor: KABUSHIKI KAISHA SANKYO SEIKI SEISAKUSHO, Suwa-gun Nagano (JP)
(72) Inventor: Iizawa, Motohiro, 10801-2, Haramura, Suwa-gun, Nagano (JP)
(74) Representative: Grünecker, Kinkeldey, Stockmair & Schwanhäusser Anwaltssozietät

(56) References cited:
- DE-A- 4 019 742
- US-A- 3 949 422
- US-A- 4 636 890

## Description

### BACKGROUND OF THE INVENTION

### Field of the Invention

This invention relates to a magnetic head supporting mechanism.

### Related Art

Unexamined Japanese Utility Patent Application Sho. 60-760 has disclosed a supporting mechanism for a magnetic head which is abutted against a magnetic recording surface (layer) formed on a recording medium such as a banknote. The supporting mechanism thus disclosed is of lever type that a magnetic head is coupled to one end of one lever the other end of which is swingably supported, in such a manner that the magnetic head is freely moved to and from the magnetic recording, and the magnetic head is urged towards the magnetic recording surface by an urging means such as a spring. In the supporting mechanism of lever type, in order that, even when the magnetic head is vertically moved in correspondence to the thickness of a recording medium such as a banknote, the track position is less shifted, the distance between the swing fulcrum of the lever and the magnetic head mounting section is set to a large value.

Another supporting mechanism is of linear slide type that two guide pins are arranged in a guide groove which is extended towards a recording medium in such a manner that one of the two guide pins is located above the other, and the upper guide pin supports the magnetic head, and the magnetic head is urged by an urging means towards the recording medium.

Another supporting mechanism described in US-3,949,422 discloses a two lever construction where the magnetic head is held fixed by the second lever. This has the disadvantage that the position of the magnetic head is dependent from the distance to the magnetic recording surface.

In the above-described supporting mechanism of one lever type, the distance between the magnetic head mounting section and the arm swing end is long. Hence, it requires a large planar space, and it is difficult to miniaturized the magnetic head supporting mechanism and a device having the latter. If the length of the lever is made short, then the space may be reduced. However, in this case, the distance between the magnetic head mounting section and the lever swing fulcrum is short, and accordingly the radius of swing of the magnetic head is short. Hence, in the case where the lever is swung as much as one and the same stroke, the position of the magnetic head is greatly shifted in a direction perpendicular to the direction of swing, which causes the magnetic head to record or reproduce the magnetic data unsatisfactorily.

On the other hand, in the supporting mechanism of linear slide type, the pins are supported by one and the same guide groove, and therefore it is unnecessary to increase the length of the lever. However, in order to stably slide the magnetic head towards the recording medium, the two pins must be spaced away from each other. Hence, the supporting mechanism is unavoidably bulky in the direction in which the magnetic head is moved to and from the magnetic recording surface.

### SUMMARY OF THE INVENTION

The disadvantages of the magnetic head supporting mechanisms according to the state-of-the-art as described above are remedied by a magnetic head supporting mechanism as defined in claim 1.

A magnetic head supporting mechanism according to the invention supports a magnetic head which is supported swingably in a direction in which the magnetic head performs relative movement with respect to a recording medium and in a direction perpendicular to the firstly mentioned direction so that the magnetic head is able to follow the magnetic recording surface of the recording medium, and which is urged to abut against the magnetic recording surface.

The magnetic head is swingably coupled to a swing lever which is swingably supported on a pair of swing levers with the aid of a coupling section, and the pair of swing levers is swingably coupled to a frame. When the swing levers swing, the fulcrum of swing of the lever supporting the magnetic head is substantially straightly guided so that the magnetic head is abutted against the magnetic recording surface of the recording medium; that is, the magnetic head is moved vertically. In order to increase the movement distance, it is preferable that the distance between the coupling section and the swing fulcrum of the lever supporting the magnetic head is equal to the distance between the coupling section and the swing fulcrum of the levers on the frame.

In the case where the movement distance is predetermined, the length of the lever can be decreased. However, if a necessary space is obtained with the space required for the whole device taken into account, then it is not always necessary that the distance between the coupling section and the swing fulcrum of the lever supporting the magnetic head is equal to the distance between the coupling section and the swing fulcrum of the levers on the frame. In the case where the distance between the coupling section and the swing fulcrum of the lever supporting the magnetic head is made equal to the distance between the coupling section and the swing fulcrum of the levers on the frame, it is preferable that the swing fulcrum of the lever supporting the magnetic head, and the swing fulcrum of the levers on the frame are on one and the same line in the direction in which the magnetic head is abutted against the magnetic recording surface.

In this case, the swing levers are swung with the aid of the swing fulcrum of the levers on the frame and the coupling section, respectively.

Hence, in moving the magnetic head as much as a certain stroke, when compared with the conventional system in which the magnetic head is supported by only one lever, the ranges of swing of the swing levers are reduced, and the swing levers can be decreased in length. Furthermore, in the case where the ranges of swing are made equal to that of the conventional lever type supporting mechanism, the magnetic head can be increased in the amount of stroke.

The frame has a guide section which is extended in a direction in which the magnetic head is abutted against the magnetic record surface, and the guide section thus provided is engaged with an engaging section which is provided for the swing fulcrum of the lever supporting the magnetic head and the swing levers. Therefore, the engaging section for the magnetic head is guided by the guide section, thus being moved in a direction in which the magnetic head is abutted against the magnetic recording surface, so that moving the magnetic head to and from the magnetic recording surface can be achieved with ease.

Furthermore, the coupling section may have an urging member which urges the magnetic head in the direction in which the magnetic head abuts against the magnetic recording surface of the recording medium, and a regulating means may be provided which regulates the movement of the magnetic head in the direction in which the magnetic head abuts against the magnetic recording surface, against the elastic force of the urging member.

In this case, the magnetic head is held at a predetermined lower position until the regulating means is released. When the regulating means is released, owing to the action of the urging means the two swing levers are swung about the coupling section, and are swung about the frame swing fulcrum, so that the magnetic head is moved in the direction in which the magnetic head is abutted against the magnetic recording surface, while being guided by the engaging section and the guide groove section.

### BRIEF DESCRIPTION OF THE DRAWING(S)

FIG. 1 is a side view, with parts cut away, outlining the structure of a recording medium reader to which the technical concept of the invention is applied.

FIG. 2 is an exploded perspective view of a magnetic head supporting mechanism showing an embodiment of the invention.

FIG. 3 is a plan view, with parts cut away, showing the structure of swing levers, and an urging means mounting state.

FIG. 4 is a side view of components shown in FIG. 3.

FIG. 5 is an exploded perspective view showing the construction of a regulating means.

FIG. 6 is a plan view for a description of the arrangement of essential components in the regulating means.

FIG. 7 is a side view showing a regulating state by the regulating means.

FIG. 8 is a side view for a description of the arrangement and operation of a second engaging member in the regulating means.

FIG. 9 is a side view for a description of the arrangement and operation of a first engaging member in the regulating means.

FIG. 10 is a side view for a description of the operation of a head supporting mechanism.

### DETAILED DESCRIPTION OF THE PREFERRED EMBODIMENTS

One embodiment of the invention will be described with reference to the accompanying drawings.

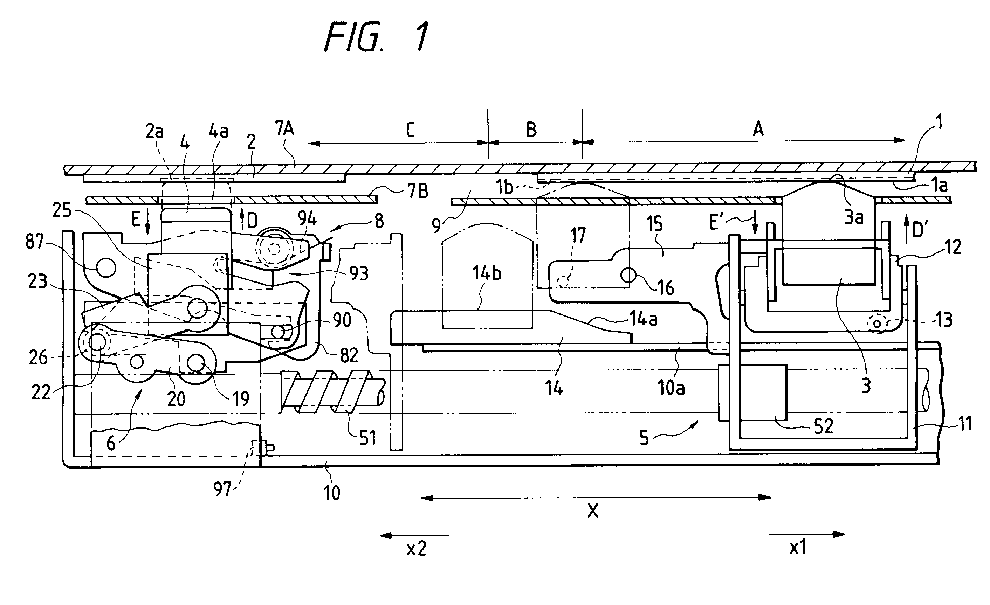

A recording medium reader, as shown in FIG. 1, comprises: a movable (travel type) magnetic head 3 which moves while abutting against the magnetic recording surface 1a of a first recording medium 1 in order that magnetic data are transmitted between the magnetic recording surface 1a and the magnetic head 3; and a stationary (non-travel type) magnetic head 4 which is not movable. The latter 4 is abutted against the magnetic recording head 2a of a second recording medium 2 so that magnetic data are transmitted between the magnetic recording surface 2a and the magnetic head 4. When the upper portions 3a and 4a of the magnetic heads 3 and 4 are in abutment with the magnetic recording surfaces 1a and 2a, respectively, the recording or reproducing of magnetic data is carried out every action, or both the recording and reproducing of magnetic data are carried out simultaneously every action.

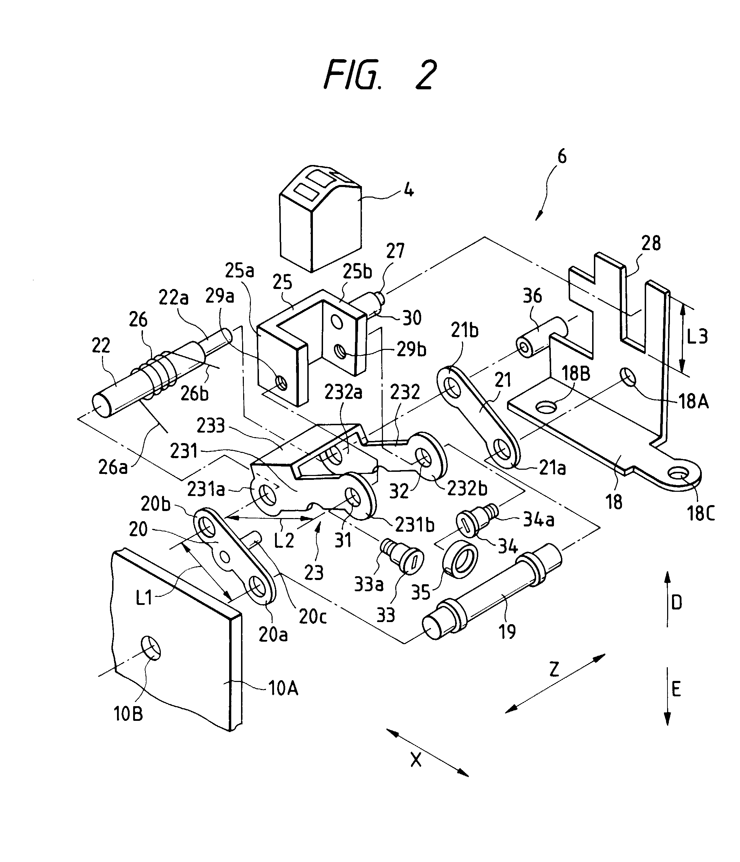

The first recording medium 1 and the second recording medium 2 are different banknotes in which the magnetic recording surfaces 1a and 2a are arranged in different direction. More specifically, the magnetic recording surface 1a of the first recording medium 1 is extended in the direction of the arrow X; while the magnetic recording surface 2a of the second recording medium 2 is extended in the direction (the direction Z in FIG. 2) perpendicular to the direction of the arrow X. Whether the medium inserted is the first recording medium 1, or whether it is the second recording medium is detected by a detecting sensor which is arranged near the medium receiving inlet.

When the first recording medium 1 is detected, the recording medium reader drives medium conveying means to convey the first recording medium 1 towards the magnetic head 3 and positions (stops) the magnetic recording surface 1a on the travel way (orbit) of the magnetic head 3. When the second recording medium 2 is detected, the recording medium reader moves the second recording medium 2 in such a manner that the latter 2 is sliding on the top of the magnetic head 4. It goes without saying that the magnetic head 4 is positioned confronted with the magnetic recording surface 2a. The first recording medium 1, and the second recording medium 2 are conveyed along a medium conveying path 9 which are formed by guide boards 7A and 7B located above the magnetic heads 3 and 4.

The magnetic head 3 is moved by a feed screw mechanism 5 towards the magnetic recording surface as indicated by the arrow X with respect to the magnetic recording surface 1a. The magnetic head 4 is arranged in the direction of the arrow x2 when compared with the movable magnetic head 3 which is at the original position, while being supported by a supporting mechanism 6. The supporting mechanism 6 is provided with a regulating means 8 (described later). The feed screw mechanism 5 comprises: a screw shaft 51 extended in the direction of the arrow X; and a nut 52 threadably engaged with the screw shaft 51. The screw shaft 51 is rotatably supported by a stationary frame 10 which is a main frame. The screw shaft 51 is turned forwardly or reversely by a drive means including an electric motor, thereby to move the nut 51 in the direction of the arrow x1 or in the direction of the arrow x2, thereby to move the magnetic head 3 in the direction of the arrow x1 or in the direction of the arrow x2.

The magnetic head 3 is secured to a swing arm 12 which is swingably supported by a movable frame 11 to which the nut 52 is secured, so that it is movable in the directions of the arrows D' and E'. The swing center of the swing arm 12 is on the movable frame 11, and the magnetic head 3 is urged by a coil spring (not shown) so as to abut against the magnetic recording surface 1a; that is, it is urged in the direction of the arrow D'. On the side of the swing center of the swing arm 12, a roller 13 is rotatably supported which is engaged with a cam plate 14 which is secured to the upper portion 10a of the stationary frame 10. The upward stroke of the swing arm 12 is so determined that, even when the magnetic recording surface 1a is displaced, the upper surface 3a of the magnetic head 3 abuts positively against it. That is, even if the magnetic recording surface 1a is displaced, magnetic data can be recorded and/or reproduced satisfactorily at all times.

The cam plate 14, as shown in FIG. 1, is extended in the direction of the arrow X, and has a cam surface 14a which raises the roller 13 for a certain period of time as the magnetic head 3 is moved in the direction of the arrow x2 (on the left side), and a cam surface 14b which places the roller 13 at a predetermined position. When the cam surface 14a is engaged with the roller 13, the magnetic head 3 is moved downwardly; that is, it is moved away from the magnetic recording surface 1a as indicated by the arrow E'. When the cam surface 14b is engaged with the roller 13, the magnetic head 3 is held at the lowermost position below the guide board 7B as indicated by the two-dot chain line; that is, it is held below the medium path.

The movable frame 11 is extended in the direction of the arrow x2. The operating member 15 has pins 16 and 17 which are extended perpendicular to the surface of the drawing. Those pins 16 and 17 are engaged with the regulating means 18 to operate the latter 18.

The moving range of the magnetic head 3 includes: a slide contact range A where the upper portion 3a of the magnetic head 3 and the magnetic recording surface 1a are in slide contact with each other to record data on or to reproduce data from the first recording medium; a head retraction range B where the upper portion 3a of the magnetic head 3 is retracted from the contact position where it is brought into contact with the magnetic recording surface 1a; and a stationary head operating range C which is an elongation of the head retraction range B. In the stationary head operation range C, the operating member 15 is engaged with the regulating means 8 to operate the latter 8. The cam plate 14 and the roller 13 are so arranged that they start moving downwardly when the magnetic head 3 reaches the end 1b (the end of the recordable region) of the magnetic recording surface 1a.

The magnetic head 3 is controlled as follows: When a detecting sensor (not shown) detects the first recording medium 1, a control section (not shown) operates, so that the travel range (travel stroke) is shifted from the head retraction range B to the slide contact range A and the head is reciprocated between the slide contact range A and the head retraction range B, and that the head is stopped when it comes to the lowermost position (indicated by the two-dot chain line in FIG. 1) in the head retraction range B. In the embodiment, the state that the magnetic head 3 indicated by the two-dot chain line is located at the lowermost position below the guide board 7B, corresponds to the home position of the magnetic head 3.

When the detecting sensor (not shown) detects the second recording medium, the control section (not shown) operates, so that the magnetic head 3 is so moved that the travel range (travel stroke) is shifted to the stationary head operating range C. When a switch 97 provided on the frame 1 operates, the magnetic head 3 is stopped.

The head supporting mechanism 6 adapted to support the stationary magnetic head 4, as shown in FIG. 2, essentially comprises: a pair of swing levers 20 and 21 which are swingably supported on a shaft 19; another swing lever, namely, a holder 23 which is also swingably supported through a shaft (coupling section) 22 on the swing levers 20 and 21; a head block 25 supporting the magnetic head 4; a stationary frame 18 having a guide groove 28 adapted to guide a guide pin 27 which is formed on the head block 25; and an urging member, namely, a torsion coil spring 26.

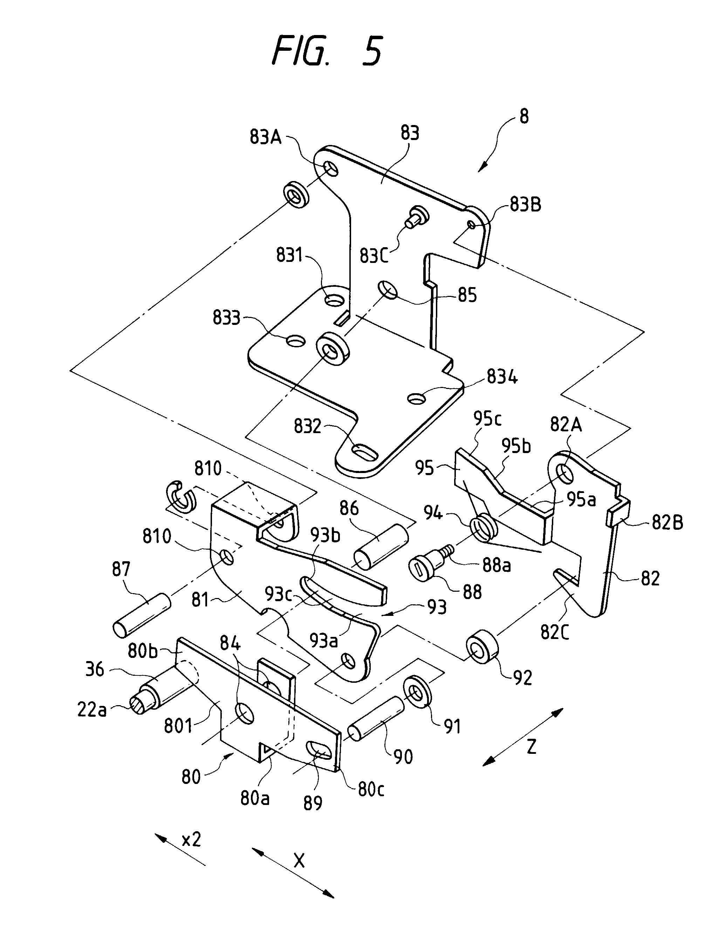

The frame 18 is of metal and L-shaped in section. The frame 18 is secured to a sub-frame 83 (FIG. 5) with screws inserted into openings 18B and 18C. Since the sub-frame 83 is secured to the stationary frame (main frame) 10, it is integral with the stationary frame 10. As shown in FIG. 2, the frame 18 has a guide groove 28 which is extended in the direction of the arrow D or E. Furthermore, the frame 18 has a bearing hole 18 right below the guide groove 28 in such a manner that the bearing hole is extended perpendicular to the direction of the arrow E. The side wall 10A of the stationary frame 10, which confronts with the frame 18, has another bearing hole 10b which is in alignment with the bearing hole 18A.

Both end portions of the shaft 19 rotatably support first end portions 20a and 21a of the swing levers 20 and 21, respectively, and inserted into the bearing holes 18A and 18B; that is, the shaft 19 is laid between the frame 18 and the side wall 10A. Hence, the two ends of the shaft 19 are the fulcrums of swing of the swing levers 20 and 21 with respect to the side wall 10A and the frame 18. The remaining second ends 20b and 21b of the swing levers 20 and 21 supports the shaft 22. The shaft 22 is inserted into first end portions 231a and 232a of both side walls 231 and 232 which are the base end portion of the holder 23, and it is located above the shaft 19. That is, the shaft 22 rotatably supports the holder 23, and serves as the fulcrums of swing of the coupling sections. The two side walls 231 and 232 of the holder 23 are bent downwardly, and they are coupled to each other through the coupling section 233. The free end portions 231b and 232b of the two side walls 231 and 232 have holes 31 and 32, respectively, which are in alignment with each other.

The head block 25 is U-shaped in section. The lower end portion of the magnetic head 4 is bonded to the head block 25 in such a manner that the latter 25 embraces the magnetic head 4. The side walls 25a and 25b of the head block 25 have threaded holes 29a and 29b which are in alignment with each other. The side wall 25b has a guide pin 27 right above the threaded holes 29b on which a cylindrical slider is put, in such a manner that the guide pin 27 protrudes towards the guide groove 28. The length of the guide pin 27 is so determined that the guide pin 27 is inserted into the guide groove 28 and guided thereby.

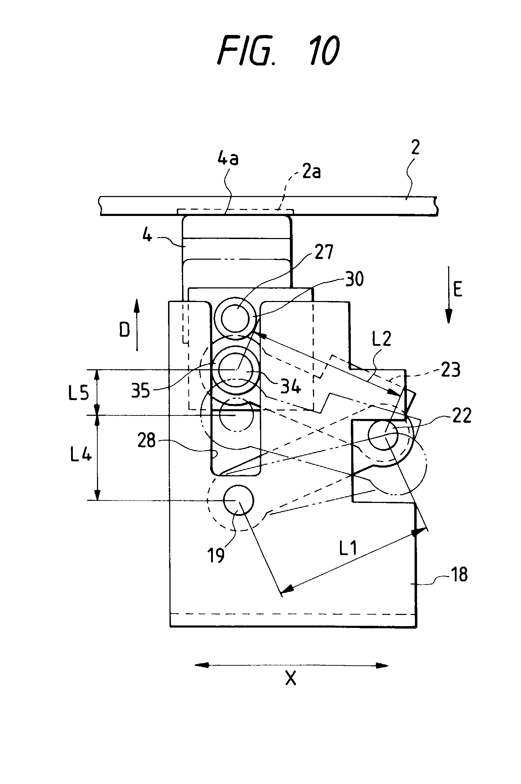

In the head block 25, pins 33 and 34 having threaded portions 33a and 34a are inserted into holes 31 and 32 and threadably engaged with threaded holes 29a and 29b. That is, the head block 25 is supported by the holder 23 in such a manner that it is slightly swingable in the directions (indicated by the arrow X) perpendicular to the direction in which the magnetic recording surface 2a is formed. The pins 33 and 34 are the fulcrums of swing of the lever supporting the magnetic head. The slider 30 mounted on the guide pin 27 forms a small gap with the guide groove 28 as shown in FIG. 10, and therefore it is supported in such a manner that it is slightly swingable in the directions of the arrow X, thus regulating the range of swing of the magnetic head 4 so as to follow the inclination and modification of the second recording medium 2 when conveyed. A cylindrical slider 35 is mounted on the pin 34. The latter 34 has a predetermined length so that it is inserted into the guide groove 28, thus forming an engaging section at the time of vertical slide. That is, the pin 34 serves as a guide at the time of vertical slide.

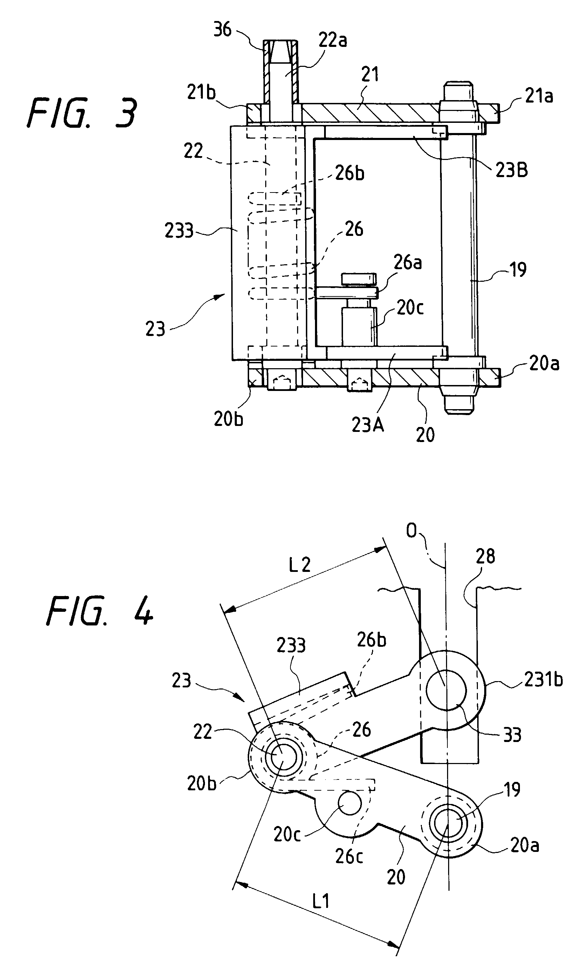

As shown in FIG. 4, the distance L1 between the fulcrums of swing of the swing levers 20 and 21 is equal to the distance L2 between the fulcrums of swing of the holder 23. The swing levers 20 and 21, and both side walls 231 and 232 of the holder form half of a pantograph. The shaft 19, which is the fulcrum of swing of the swing lever 20, the threaded holes 29a and 29b, which are the fulcrums of swing of the magnetic head 4 swingably supported by the holder 23, and the guide pin 27 of the head block 25 are on the prolongation O (one and the same line) of the guide groove 28.

A torsion coil spring 26 is wound on the shaft 22. Both ends 26a and 26b of the torsion coil spring 26, as shown in FIG. 3, are locked to a spring hook 20c provided at the center of the swing lever 20, and the rear surface of the coupling section 233, thus urging the holder 23 and levers 20 and 21 to increase the distance between the shaft 19 and the pins 33 and 34. The magnetic heat 4 supported by the other end portion of the holder 23 is urged by the torsion coil spring 26 in the direction of the arrow D (to abut against the recording medium (cf. FIG. 1). The pins 33 and 34 inserted into the holder 23 are arranged on the urging direction side (upward side). The upward stroke of the head supporting mechanism 6 is set to the value with which, even when the magnetic recording surface 2a is displaced, the upper surface 4a of the magnetic head 4 is positively brought into tight-contact with the magnetic recording surface. Hence, even if the magnetic recording surface 2a is somewhat changed in position, magnetic data are satisfactorily recorded or reproduced.

That is, with the aid of the head supporting mechanism 6, the upper surface 4a of the magnetic head 4 is located below the lower guide board 7B forming the medium conveying path 9, and the magnetic head 4 is movably supported between the lowermost position where it is not in slide contact with the magnetic recording surface 2a and the position (indicated by the two-dot chain line) where the upper surface 4a of the magnetic head 4 is brought into contact with the magnetic recording surface 2a. And the magnetic head 4 is urged by the torsion coil spring 26 towards the magnetic recording surface 2a.

The length L3 of the guide groove 28 will be described to some extent. If the swing range regulation by means of the guide pin 27 is performed at a different position; for instance, it is performed with the lower guide board 7B forming the medium conveying path 9, the length L3 may be set to at least the length of movement (in the direction of the arrow D) of the pin 34. In the embodiment, the length L3 is set to a value with which the swing range regulation by means of the guide pin 27 can be achieved at the same time.

The length of the shaft 22 is such that the latter penetrates the lever 21 and protrudes from the frame 18. A cylindrical slider 36 made of resin is put on the end portion 22a of the shaft 22. The sliders 30 and 35 are also made of resin, so that, when the magnetic head 4 is moved, the slide resistance thereof against the guide groove 28 is minimized.

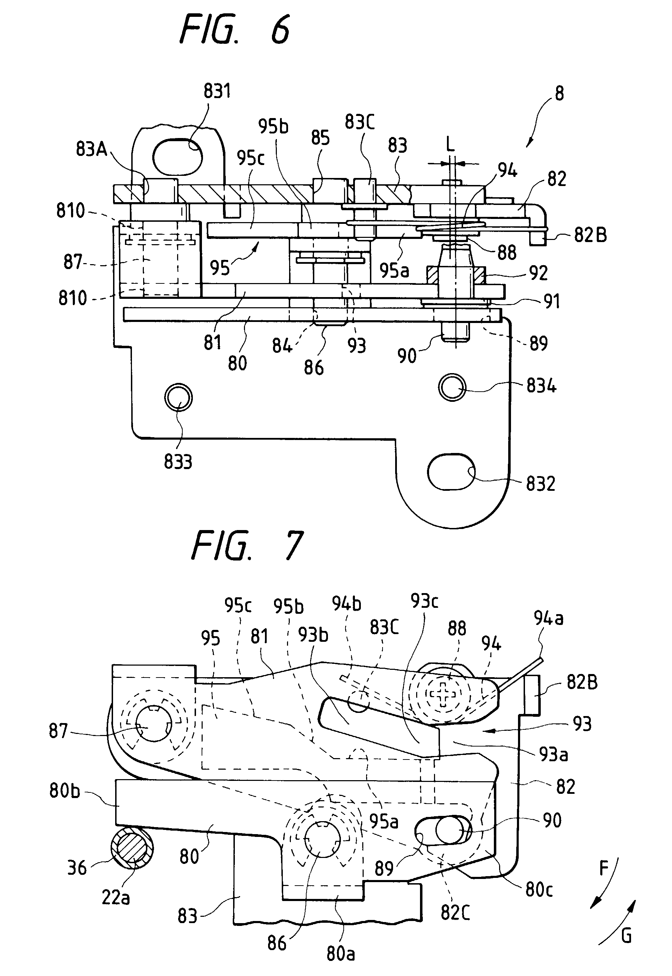

The regulating means 8 is to regulate the operation of the magnetic head 4 which is urged by the coil spring 26 in the direction of the arrow D. The regulating means 8 is normally held at the lowermost position below the guide board 7B, and operates to move the magnetic head 4 located at the slide contact position (indicated by the two-dot chain line in FIG. 1) to the lowermost position (indicated by the solid line. The regulating means 8, as shown in FIGS. 5 and 7, essentially comprises: a coupling member 80 which abuts against the end portion 22a of the shaft 22 which is the coupling section; and a first engaging member 81 and a second engaging member 82 which are engaged with the operating member 15.

The central portion 80a of the coupling member 80 is bent U-shaped in section, and its one side wall 801 is extended in the directions of the arrow X. Both sides of the U-shaped central portion 80a have a pair of bearing holes 84 in the direction of the arrow Z perpendicular to the directions of the arrow X. On the other hand, a sub-frame 83 is secured to the stationary frame in such a manner that it is juxtaposed with the frame 18 (shown in FIG. 2), and the coupling member 80 is swingably supported buy a supporting shaft 86 which is inserted into the bearing holes 84 and the bearing hole 85 formed in the sub-frame 85. One end portion 22a of the shaft 22, which forms the coupling section, is pressed against the one portion 80b of the coupling member 80 by the elastic force of the torsion coil spring 26. The other end portion 80c of the coupling member 80 has an elongated hole 89 which is extended in the directions of the arrow X.

The upper portion of the sub-frame 83 has a hole 83a into which a shaft 87 is inserted, a hole 84B with which a threaded pin 88 is threadably engaged, and a spring hook 83C. Those holes 83a and 84B, and the spring hook 83C are juxtaposed in the directions of the arrow X. Reference numerals 831 and 832 designates the mounting sections with which the sub-frame 83 is coupled to the main frame 10; and reference numerals 833 and 834 designate the mounting sections with which the sub-frames 83 is coupled to the frame 18.

A shaft 87 is inserted into a pair of bearing holes 810 formed in the base end portion of the first engaging member 81; that is, the latter 81 is swingably supported. The lower end part of the other end portion of the first engaging member 81 has a coupling shaft 90 which is secured being held by a ring 91 and a stopper 92 in such a manner that the coupling shaft 90 is inserted into the elongated hole 89, and reaches the second coupling member. Above the coupling shaft 90, the first engaging member 81 has a cam groove 93 which is opened towards the operating member 15, and arranged on the orbit of the pin 16 of the operating member 15.

As shown in FIG. 1, the cam groove 19 is to engage with the pin 16 when the magnetic head 3 is in the head operating range C. The cam groove 19 is shaped as follows: That is, it, when the coupling shaft 90 is regulated as shown in FIG. 7 by the hook 82C of the second regulating member 82, includes a first inclined portion 93a which is inclined downwardly and to the left, and a second inclined portion 93b which inclined downwardly to the right, and a flat portion 93c connected to the first and second inclined portions 93a and 93b. The first inclined portion 93a gradually lowers its position with respect to the pin 16, and therefore when the first engaging member 81 is swung in the direction of the arrow G, the flat portion 93c is held as it is. The second inclined portion 93b raises its position gradually with respect to the pin 16, so that the first engaging member 81 is swung in the direction of the arrow F.

The second engaging member 82 is swingably mounted on the sub-frame 18 as follows: That is, a pin 88, whose end portion is a threaded portion 88a, is inserted into a hole 82A formed in the upper portion of the second engaging member 82, and the threaded portion 88a is threadably engaged with the threaded hole 83B. The upper end portion of the second engaging member 82, which is on the side of the magnetic head 3, has a bent spring hook 82B. Both ends 94a and 94b of a torsion coil spring 94 (which is wound on a pin 88) are locked to the spring hook 82B and the spring hook 83C of the sub-frame 83. The second engaging member 82 is kept urged by the torsion coil spring 94 clockwise as indicated by the arrow F (in the regulated direction).

The pin 88, about which the second engaging member swings, is located closer as much as the distance L (cf. FIG. 6) to the swing-urging side than the coupling shaft 90. Below the spring hook 82B, a hook 82C is formed which is a regulating section to lock the coupling shaft 90. The hook 82C is long enough to lock the coupling shaft 90 from below. The hook 82C holds the first engaging member 81 at the initial position indicated by the solid line in FIG. 7, to prevent shaft 22 from lifting upwardly, so that the magnetic head 4 is held at the lowermost position as indicated by the solid line in FIG. 1. In the embodiment, this lowermost position is referred to as "the home position" of the magnetic head 4.

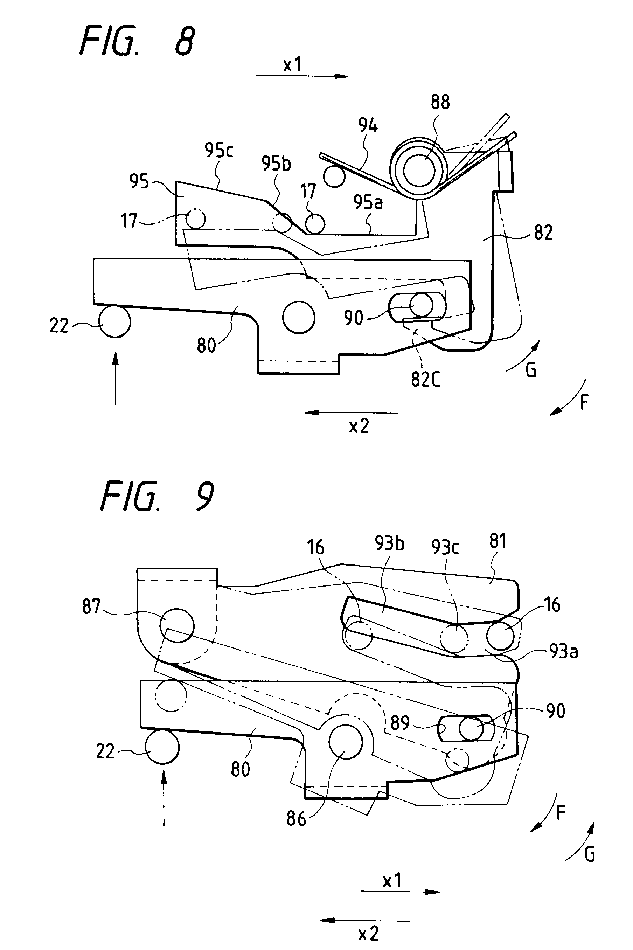

The second engaging member 82 includes a cam 95 which is extended in the direction of the arrow x2. The cam 95 is on the orbit of the pin 17 of the operating member 15, and includes a guide surface 95a and inclined surfaces 95b and 95c. The guide surface 95a is an approach section which, when the magnetic head 3 moves from the head retraction range B into the head operating range C (cf. FIG. 1), it is engaged with the pin 17. The inclined surface 95b, as shown in FIG. 8, is inclined upwardly to the left so that the second engaging member 82 is swung counterclockwise about the pin 88 as indicated by the arrow G, to unlock the coupling shaft 90 from the hook 82C. The inclined surface 95c is moderately inclined upwardly to the left when compared with the incline surface 95b so that the second engaging member 82 is held unlocked from the hook 82C and the coupling shaft 90.

The cam groove 93 and the pin 16 of the operating member 15, and the cam 95 and the pin 17 of the operating member 15 function as follows: As shown in FIGS. 8 and 9, when the pin 17 is positioned on the inclined surface 95 to unlock the coupling shaft 90 from the hook 82C, the pin 16 is moved to the flat portion from the first inclined portion 93c to move the coupling shaft 90 slightly upwardly thereby to contribute to the unlocking of the coupling shaft 90. Thereafter, when the pin 17 is positioned on the inclined surface 95c to unlock the coupling shaft 90 from the hook 82c, the pin 16 is positioned on the second inclined portion 93b to swing the first engaging member 81 about the shaft 87 in the direction of the arrow F, and to swing the coupling member 80 about the supporting shaft 86 in the direction of arrow F with the aid of the coupling shaft, thereby to allow the upward movement of the shaft 22 which is the coupling section of the two swing levers 20 and the holder 23.

Now the operation of the recording medium reader designed as described above will be described.

When the detecting sensor (not shown) detects the second recording medium 2, the magnetic head 3 together with the operating member 15 on the travel frame 11 is moved to the stationary head operating range C from the head retracting range B, which is the home position of the magnetic head, until the switch 97 shown in FIG. 1 is operated.

When the magnetic head 3 is moved to the stationary head operating range C from the head retracting range B in the above-described manner, as shown in FIG. 8 the pin 17 of the operating member 15 is engaged with the guide surface 95a of the second engaging member 82, so that the pin is moved towards the incline surface 95b while being guided thereby, thus moving the inclined surface 95b downwardly as indicated by the two-dot chain lines. As a result, the second engaging member 82 is caused to swing about the pin 88, thus unlocking the coupling shaft 90 from the hook 82c.

When the magnetic head is moved to the stationary head operating range C from the head retracting range B, the pin 16 of the operating member 15 is engaged with the cam groove 93 as shown in FIG. 9. However, in the case where the pin 17 is on the inclined surface 95b, the pin 16 is engaged with the inclined portion 93a as indicated by the two-dot chain lines. As a result, the first supporting member 81 is somewhat swung about the shaft 87 in the direction of the arrow G with the aid of the pin 16, thereby to slightly raise the coupling shaft 90 to make the second engaging member 82 to readily move in the direction of the arrow G, while the coupling member 80 is prevented from being swung about the shaft 86 in the direction of the arrow F by the upward energy of the pin 22. And when the pin 16 is positioned on the flat portion 93c, this state is maintained unchanged. In the above-described operation, the magnetic heads 3 and 4 are held at the lowermost positions. Hence, when one of the magnetic heads is performing a recording or reproducing operation, the other magnetic head will never operate. That is, with the recording medium reader, a recording or reproducing operation can be achieved stably at all times.

When the magnetic head 3 is further moved in the direction of the arrow x2 in the stationary head operating range C, the pin 17 is moved from the inclined surface 95b to the inclined surface 95c (cf. FIG. 8), and the second engaging member 82 is held at the release position indicated by the two-dot chain line. When the pin 16 is moved to the second inclined portion 93b indicated by the two-dot chain line (FIG. 9) in association with the movement of the pin 17, the first engaging member 81 is swung about the shaft 87 in the direction of the arrow F, so that the coupling member 80 is swung about the supporting shaft in the direction of the arrow F with the aid of the coupling shaft 90, thus raising the shaft 22. When the shaft 22 is raised, the elastic force of the torsion coil spring 26 opens the holder 23 and the swing levers 21 and 20, so that, while the shaft 22 is being raised, the swing levers 20 and 21 swing about the shaft 19. At the same time, the hold 23 is swung about the shaft 22, and the magnetic head 4 is raised towards the contact position as indicated by the solid line.

In this operation, the stroke of the magnetic head is the amount of displacement L5 of the inter-shaft distance L4 between the shaft 19 and the pin 34. The amount of displacement L5 is the sum of the amount of displacement of the swing of the levers 20 and 21 about the shaft 19 and that of the swing of the holder 23 about the shaft 22. Hence, in this case, when compared with the case where the swing is made with only one lever, the ranges of swing of the swing levers 20 and 21 and the holder 23 is small, and the length of the lever can be reduced.

The inter-swing-fulcrum distance L1 is equal to the inter-swing-fulcrum distance L2. And the line connecting the shaft 19 and the pins 33 and 34, and the direction in which the guide groove 28 guides the magnetic head 4 are on one and the same line O, and the pin 34 is guided by the guide groove 28. Hence, when the magnetic head 4 is moved along the guide groove 28 in the direction of abutment against the magnetic recording surface 2a, the shift in the directions of the arrow X is eliminated. Therefore, the magnetic head is correctly abutted against the magnetic recording surface 2a, and accordingly magnetic data are recorded or reproduced satisfactorily at all times.

In the movement of the magnetic head 4, the pins 27 and 34 are guided by the guide groove 28. Hence, the upward and downward movements of the magnetic head 4 are stable. Furthermore, the pins 27 and 34 are guided with the aid of the sliders 30 and 35, and therefore the slide resistance of the pins 27 and 34 against the guide groove is minimized.

When the magnetic head 3 is moved from the stationary head operating range C to the head retracting range B in the direction of the arrow x1, the pins 17 and 16 indicated by the two-dot chain lines in FIGS. 8 and 9 are also moved in the direction of the arrow x1. As a result, the first engaging member 81 is swung in the direction of the arrow G by the second inclined portion 93b and the pin 16, and the coupling shaft 90 is raised in the same direction. As a result, the coupling member 80 is swung from the position (indicated by the two-dot chain line) about the shaft 86 in the direction of the arrow G, so that the pin 22 is moved downwardly, and the magnetic head 4 is moved downwardly in the direction of the arrow E. And when the pin 16 reaches the flat portion 93c, the coupling shaft 90 is temporarily held at a position which is somewhat higher than the position indicated by the solid-line. On the other hand, when the pin 17 is moving on the inclined portion 95c, the second engaging member 82 is at the release position as indicated by the two-dot chain line. When the pin 17 moves on the incline portion 95b, the second engaging member 82 is swung in the direction of the arrow F by the elastic force of the torsion coil spring 94, so that, with the coupling shaft 90 held with the hook 82C, and the pin 22 is locked to the lower position with the aid of the coupling member 80. As a result, the magnetic head 4 is held at the home position.

As was described above, the magnetic head 4 is urged by the head supporting mechanism 6 to abut against the magnetic recording surface 2a, and its movement in that direction is regulated by the regulating means 8. However, the magnetic head 4 is returned to the retracting position by the over-stroke drive force of the magnetic head 3. Hence, a common drive source can be employed for the movement of the magnetic heads 3 and 4.

In the above-described embodiment, two different magnetic heads are built in one recording medium reader so that the latter be applied to two different recording media, and, in order to control the vertical movement of the stationary magnetic head with the movable magnetic head 3, the regulating means 8 is provided. However, the magnetic head 4 may be so provided as to be able to move vertically if not obstructing a recording medium to be inserted (the lower position not being regulated by the regulating means 8).

The magnetic head 3 is secured to the swing arm 12 which is swingably supported on the travel frame 11 to which the nut 52 is secured; that is, the magnetic head 3 is vertically moved as the swing arm 12 is swung. However, if the shaft 19 is secured to the travel frame 11, and the guide groove 28 is formed, and the head supporting mechanism 6 is built in the travel frame 11, then the resultant mechanism may be employed as a head supporting mechanism for the magnetic head 3.

The magnetic head 3 is moved by the feed screw mechanism 5 in the magnetic recording surface direction (as indicated by the arrow X) with respect to the magnetic recording surface 1a. However, it may be designed as follows: A ring-shaped traveling path is formed with a belt and pulleys driven by a motor, and the travel frame in which the above-described head supporting mechanism 6 is coupled to the belt, so that the head is reciprocated by means of the belt.

In the above-described embodiment, as shown in FIG. 4, the inter-swing-fulcrum distance L1 of the swing levers 20 and 21 is equal to the inter-swing-fulcrum distance L2. However, it is not always necessary that the distance L1 is equal to the distance L2. In the case where those distances L1 and L2 are different from each other, the mechanism may be so designed that, with the aid of the guide groove 28, the movement can be made in a desired direction.

In the magnetic head supporting mechanism according to the invention, the two swing levers are swung about the swung fulcrums on the frame with the aid of the coupling section. Therefore, when compared with the conventional system in which the support is only one lever, the ranges of swing of the swing levers is small for a certain stroke movement of the magnetic head. Hence, the length of the swing levers can be reduced. By guiding the movement of the magnetic head with the guide groove, the amount of shift of the magnetic head in the direction perpendicular to the direction of swing of the magnetic head is prevented. Thus, the recording medium reader id small in size, and is able to stably operate the magnetic head.

## Claims

1. A magnetic head supporting mechanism (6) comprising:
a magnetic head (4) which is urged to abut against the magnetic recording surface (2a) of a recording medium (2), and is supported swingably in a direction perpendicular to a direction of relative movement to said recording medium (2) so as to follow said magnetic recording surface (2a);
a pair of swing levers (20,21) and another swing lever (23) which are swingably supported on each other with the aid of a coupling section (22), the pair of said swing levers (20,21) being swingably provided on a frame (18),
**characterized in that**
the swing fulcrum (33,34) of the swing lever (23) swingably supporting said magnetic head (4) and the swing fulcrum (19) of the pair of swing levers (20,21) on the frame are being provided on the same side with respect to said coupling section (22),
a guide section (28) is provided along which the swing fulcrum (33, 34) of the swing lever (23) supporting said magnetic head (4) linearly moves in a direction in which said magnetic head (4) is abutted against the magnetic recording surface (2a) of said recording medium (2), and
wherein said guide section (28) guides the swing fulcrum (33, 34) of the swing lever (23) supporting said magnetic head (4), to move said magnetic head (4) vertically.

2. A magnetic head supporting mechanism (6) as claimed in claim 1, wherein the distance between said coupling section (22) and the swing fulcrum (33, 34) of the swing lever (23) supporting said magnetic head (4) is equal to the distance between said coupling section (22) and the swing fulcrum (19) of the pair of swing levers (20, 21) on said frame (18), and the swing fulcrum (33,34) of the swing lever (23) supporting said magnetic head is arranged on a side in which said magnetic head (4) abuts against said magnetic recording surface (2a) with respect to the swing fulcrum (19) of said frame.

3. A magnetic head supporting mechnism (6) as claimed in claim 1, wherein the distance between said coupling section (22) and the swing fulcrum (33,34) of the swing lever (23) supporting said magnetic head (4) is different from the distance between said coupling section (22) and the swing fulcrum (19) of the pair of swing levers (20,21) on said frame, and said guide section (28) is so shaped that said guide section is linear in a direction in which said magnetic head (4) is abutted against the magnetic recording surface (2a) of said recording medium (2).

4. A magnetic head supporting mechanism (6) as claimed in claim 1, wherein said frame (18) is a stationary frame which is secured to a recording medium reader body which supports said recording medium (2), and said guide section (28) is formed on said stationary frame.

5. A magnetic head supporting mechanism (6) as claimed in claim 1, wherein said frame (18) is a travel frame which, with respect to a recording medium reader which supports said recording medium, moves in the magnetic stripe forming direction of said recording medium and said guide section (28) is formed on said travel frame.

6. A magnetic head supporting mechanism (6) as claimed in claim 4, further comprising:
a guide groove (28) provided within said frame (18) in a direction in which said magnetic head (4) is abutted against the magnetic recording surface (2a); and
an engaging section (34) provided at the swing fulcrum (33,34) of the swing lever (23) supporting said magnetic head (4) and engaged with said guide groove (28), said engaging section (34) being guided by said guide groove (28), to move said magnetic head (4) vertically.

7. A magnetic head supporting mechanism (6) as claimed in claim 1, further comprising:
an urging member (26) adapted to urging said magnetic head (4) to move to abut against the magnetic recording surface (2a) of said recording medium (2); and
a regulating means (8) for regulating the movement of said magnetic head (4) in a direction, in which said magnetic head is abutted against the magnetic recording surface (2a) of said recording medium (2), against the urging force of said urging member (26).

## Patentansprüche

1. Magnetkopfträgermechanismus (6) der umfaßt:
einen Magnetkopf (4), der gerückt wird, damit er gegen die Magnetaufzeichnungsfläche (2a) eines Aufzeichnungsmediums (2) stößt, und in einer Richtung verschwenkbar gehalten ist, die senkrecht zu der Richtung einer relativen Bewegung in bezug auf das Aufzeichnungsmedium (2) ist, damit er der Magnetaufzeichnungsfläche (2a) folgt;
ein Paar Schwenkhebel (20, 21) und einen weiteren Schwenkhebel (23), die verschwenkbar aneinander mit Hilfe eines Kopplungsabschnitts (22) gehalten sind, wobei das Paar Schwenkhebel (20, 21) verschwenkbar an einem Rahmen (18) vorgesehen ist, **dadurch gekennzeichnet**, daß
der Schwenkpunkt (33, 34) des Schwenkhebels (23) den Magnetkopf (4) verschwenkbar trägt, und die Schwenkpunkte (19) des Paares Schwenkhebel (20, 21) an dem Rahmen auf derselben Seite in bezug auf den Kopplungsabschnitt (22) vorgesehen sind,
ein Führungsabschnitt (28) vorgesehen ist, entlang dem sich der Schwenkpunkt (33, 34) des Schwenkhebels (23), der dem Magnetkopf (4) trägt, geradlinig in einer Richtung bewegt, in der der Magnetkopf (4) gegen die Magnetaufzeichnungsfläche (2a) des Aufzeichnungsmediums (2) stößt, und
wobei der Führungsabschnitt (28) den Schwenkpunkt (33, 34) des Schwenkhebels (23), der den Magnetkopf (4) trägt, führt, damit sich der Magnetkopf (4) vertikal bewegt.

2. Magnetkopfträgermechanismus (6), wie in Anspruch 1 beansprucht, wobei der Abstand zwischen dem Kopplungsabschnitt (22) und dem Schwenkpunkt (33, 34) des Schwenkhebels (23), der den Magnetkopf (4) trägt, gleich dem Abstand zwischen dem Kopplungsabschnitt (22) und dem Schwenkpunkt (19) des Paares Schwenkhebel (20, 21) an dem Rahmen (18) ist, und der Schwenkpunkt (33, 34) des Schwenkhebels (23), der den Magnetkopf trägt, auf einer Seite in bezug auf den Schwenkpunkt (19) des Rahmens angeordnet ist, auf der der Magnetkopf (4) gegen die Magnetaufzeichnungsfläche (2a) stößt.

3. Magnetkopfträgermechanismus (6), wie in Anspruch 1 beansprucht, wobei der Abstand zwischen dem Kopplungsabschnitt (22) und dem Schwenkpunkt (33, 34) des Schwenkhebels (23), der den Magnetkopf (4) trägt, von dem Abstand zwischen dem Kopplungsabschnitt (22) und dem Schwenkpunkt (19) des Paares Schwenkhebel (20, 21) an dem Rahmen (18) verschieden ist, und der Führungsabschnitt (28) so geformt ist, daß der Führungsabschnitt in einer Richtung geradlinig ist, in der der Magnetkopf (4) gegen die Magnetaufzeichnungsfläche (2a) des Aufzeichnungsmediums (2) stößt.

4. Magnetkopfträgermechanismus (6), wie in Anspruch 1 beansprucht, wobei der Rahmen (18) ein ortsfester Rahmen ist, der an einem Aufzeichnungsmediumleserkörper befestigt ist, der das Aufzeichnungsmedium (2) trägt, und der Führungsabschnitt (28) an dem ortsfesten Rahmen gebildet ist.

5. Magnetkopfträgermechanismus (6), wie in Anspruch 1 beansprucht, wobei der Rahmen (18) ein Transportrahmen ist, der sich in bezug auf einen Aufzeichnungsmediumsleser, der das Aufzeichnungsmedium trägt, in der Magnetstreifenbildungsrichtung des Aufzeichnungsmediums bewegt, und der Führungsabschnitt (28) an dem Transportrahmen gebildet ist.

6. Magnetkopfträgermechanismus (6), wie in Anspruch 4, der des weiteren umfaßt:
eine Führungsnut (28), die in dem Rahmen (18) in einer Richtung gebildet ist, in der der Magnetkopf (4) gegen die Magnetaufzeichnungsfläche (2a) zum Anstoßen gebracht wird, und
einen Eingriffsabschnitt (34), der an dem Schwenkpunkt (33, 34) des Schwenkhebels (23), der den Magnetkopf (4) trägt, vorgesehen ist und in die Führungsnut (28) eingreift, wobei der Eingriffsabschnitt (34) durch die Führungsnut (28) geführt wird, damit der Magnetkopf (4) vertikal bewegt wird.

7. Magnetkopfträgermechanismus (6), wie in Anspruch 1 beansprucht, der des weiteren umfaßt:
ein Drückteil (26), das den Magnetkopf (4) drücken kann, damit er sich bewegt und gegen die Magnetaufzeichnungsfläche (2a) des Aufzeichnungsmediums (2) drückt; und
eine Einstelleinrichtung (8) zur Einstellung der Bewegung des Magnetkopfes (4) gegenüber der Drückkraft des Drückteils (26) in einer Richtung, in der der Magnetkopf mit der Magnetaufzeichnungsfläche (2a) des Aufzeichnungsmediums (2) zum Anstoßen gebracht wird.

## Revendications

1. Mécanisme de support de tête magnétique (6) comportant :
une tête magnétique (4) qui est poussée afin de buter contre la surface d'enregistrement magnétique (2a) d'un support d'enregistrement (2), et est supportée de façon oscillante dans une direction perpendiculaire à une direction de mouvement relatif par rapport au dit support d'enregistrement (2) de façon à suivre ladite surface d'enregistrement magnétique (2a);
une paire de leviers oscillants (20, 21) et un autre levier oscillant (23) qui sont supportés de façon oscillante l'un sur l'autre à l'aide d'une section de liaison (22), la paire desdits leviers oscillants (20, 21) étant prévue de façon oscillante sur un bâti (18),
caractérisé en ce que
le point de pivotement d'oscillation (33, 34) du levier oscillant (23) supportant de façon oscillante ladite tête magnétique (4) et le point de pivotement d'oscillation (19) de la paire de leviers oscillants (20, 21) sur le bâti sont prévus sur le même côté par rapport à ladite section de liaison (22),
une section de guidage (28), le long de laquelle le point de pivotement d'oscillation (33, 34) du levier oscillant (23) supportant ladite tête magnétique (4) se déplace de manière linéaire dans une direction dans laquelle ladite tête magnétique (4) bute contre la surface d'enregistrement magnétique (2a) dudit support d'enregistrement (2), est prévue, et
ladite section de guidage (28) guide le point de pivotement d'oscillation (33, 34) du levier oscillant (23) supportant ladite tête magnétique (4), afin de déplacer ladite tête magnétique (4) verticalement.

2. Mécanisme de support de tête magnétique (6) selon la revendication 1, dans lequel la distance entre ladite section de liaison (22) et le point de pivotement d'oscillation (33, 34) du levier oscillant (23) supportant ladite tête magnétique (4) est égale à la distance entre ladite section de liaison (22) et le point de pivotement d'oscillation (19) de la paire de leviers oscillants (20, 21) sur ledit bâti (18), et le point de pivotement d'oscillation (33, 34) du levier oscillant (23) supportant ladite tête magnétique est disposé sur un côté dans lequel ladite tête magnétique (4) bute contre ladite surface d'enregistrement magnétique (2a) par rapport au point de pivotement d'oscillation (19) dudit bâti.

3. Mécanisme de support de tête magnétique (6) selon la revendication 1, dans lequel la distance entre ladite section de liaison (22) et le point de pivotement d'oscillation (33, 34) du levier oscillant (23) supportant ladite tête magnétique (4) est différente de la distance entre ladite section de liaison (22) et le point de pivotement d'oscillation (19) de la paire de leviers oscillants (20, 21) sur ledit bâti, et ladite section de guidage (28) est conformée de telle sorte que ladite section de guidage est linéaire dans une direction dans laquelle ladite tête magnétique (4) bute contre la surface d'enregistrement magnétique (2a) dudit support d'enregistrement (2).

4. Mécanisme de support de tête magnétique (6) selon la revendication 1, dans lequel ledit bâti (18) est un bâti fixe qui est fixé sur un corps de lecteur de support d'enregistrement qui supporte ledit support d'enregistrement (2), et ladite section de guidage (28) est formée sur ledit bâti fixe.

5. Mécanisme de support de tête magnétique (6) selon la revendication 1, dans lequel ledit bâti (18) est un bâti mobile qui, par rapport à un lecteur de support d'enregistrement qui supporte ledit support d'enregistrement, se déplace dans la direction formant la bande magnétique dudit support d'enregistrement et ladite section de guidage (28) est formée sur ledit bâti mobile.

6. Mécanisme de support de tête magnétique (6) selon la revendication 4, comportant en outre :
une rainure de guidage (28) prévue dans ledit bâti fixe 18) dans une direction dans laquelle ladite tête magnétique (4) bute contre la surface d'enregistrement magnétique (2a); et
une section d'engagement (34) prévu au niveau du point de pivotement d'oscillation (33, 34) du levier oscillant (23) supportant ladite tête magnétique (4) et engagé avec ladite rainure de guidage (28), ladite section d'engagement (34) étant guidée par ladite rainure de guidage (28) afin de déplacer ladite tête magnétique (4) verticalement.

7. Mécanisme de support de tête magnétique (6) selon la revendication 1, comportant en outre :
un élément de poussée (26) prévu pour pousser ladite tête magnétique (4) afin de se déplacer pour buter contre la surface d'enregistrement magnétique (2a) dudit support d'enregistrement (2); et
des moyens de régulation (8) destinés à réguler le mouvement de ladite tête magnétique (4) dans une direction dans laquelle ladite tête magnétique bute contre la surface d'enregistrement magnétique (2a) dudit support d'enregistrement (2), à l'encontre de la force de poussée dudit élément de poussée (26).
